# EUROPEAN PATENT APPLICATION

(11) **EP 4 652 855 A1**
(43) Date of publication of application: **26.11.2025**
(21) Application number: 24744734.5
(22) Date of filing: 19.01.2024
(51) Int. Cl.: A23L 27/00, A23L 2/00, A23L 2/60, A23L 2/385, A23L 5/00

(54) **REBAUDIOSIDE D-CONTAINING COMPOSITION**

(30) Priority: 20.01.2023 JP 2023007188
(71) Applicant: Suntory Holdings Limited, Osaka-shi, Osaka 530-8203 (JP)
(72) Inventor: URAI Soichiro, Kawasaki-shi, Kanagawa 211-0067 (JP); GEZGIN Zafer, Stockley Park, Uxbridge UB111BA (GB)
(74) Representative: Mewburn Ellis LLP
(86) International application number: PCT/JP2024/001399
(87) International publication number: WO 2024/154814

(57) **Abstract**

The development of a new method for improving steviol glycoside solubility is expected. According to an aspect of the present invention, provided is a liquid composition comprising: a mixed solvent containing 50-95 wt% of at least one polyhydric alcohol selected from the group consisting of glycerin, ethylene glycol, and propylene glycol and 5-50 wt% of ethanol on the basis of the total weight of the mixed solvent; and RebD, wherein the content of RebD is 1.5-30 wt% on the basis of the total weight of the liquid composition.

## Description

### Technical Field

The present invention relates to a liquid composition containing a polyhydric alcohol, ethanol, and RebD; a method for producing the liquid composition; a beverage concentrate containing a polyhydric alcohol, ethanol, and RebD; a method for producing the beverage concentrate; and the like. The present invention also relates to a beverage containing a polyhydric alcohol, ethanol, and RebD; a method for producing the beverage; and the like.

### Background Art

Leaves of stevia (*Stevia rebaudiana*) of the family *Asteraceae* contain a secondary metabolite called steviol, a kind of diterpenoid. A steviol glycoside, in which a sugar is added to steviol, is several hundred times sweeter than sugar and thus is used in the food industry as a non-caloric sweetener. Obesity has been internationally developing into a serious social problem, and there is a growing demand day by day for non-caloric sweeteners from the viewpoints of health promotion and medical cost reduction. At present, artificially synthesized amino acid derivatives, such as aspartame and acesulfame potassium, are used as artificial sweeteners, but naturally occurring non-caloric sweeteners, such as steviol glycosides, are expected to be safer and easily gaining public acceptance.

Well known major steviol glycosides contained in stevia include rebaudioside A (hereinafter also referred to as "RebA"), in which four sugars are added to a diterpene skeleton, and stevioside, which is a steviol trisaccharide glycoside and a precursor of RebA, and these two are central substances of sweetness of stevia. In recent years, as steviol glycosides with even better taste qualities than RebA, there have been attempts to use rebaudioside D (hereinafter also referred to as "RebD"), in which five sugars are added to a diterpene skeleton, and rebaudioside M (hereinafter also referred to as "RebM"), in which six sugars are added to a diterpene skeleton, as sweeteners.

Note that some steviol glycosides including rebaudioside D are known to have generally low solubility in water. Thus, attempts have also been made to increase the solubility of steviol glycosides in water. For example, WO 2019/108609 (Patent Literature 1) discloses that a steviol glycoside composition is added to heated glycerol, propylene glycol, or a mixed solvent of those to obtain a concentrate. JP 2016-501555 T (Patent Literature 2) discloses that a liquid stevia composition containing a stevia component, a syrup component, ethanol, water, and glycerol allows a high concentration of the stevia component to remain in the solution for a long period.

### Citation List

### Patent Literature

Patent Literature 1: WO 2019/108609
Patent Literature 2: JP 2016-501555 T

### Summary of Invention

### Technical Problem

Under the circumstances as described above, development of a new technique to improve steviol glycoside solubility is awaited.

### Solution to Problem

The present inventors conducted studies and have found that preparing a RebD-containing liquid composition using a mixed solvent containing a specific polyhydric alcohol and ethanol increases the solubility of RebD, and a liquid composition containing RebD at high concentration can be obtained. In addition, the present inventors have found that a RebD-containing beverage can be provided by preparing a beverage concentrate, which is a precursor of a beverage, or a beverage using this liquid composition containing RebD at high concentration. The present invention is based on such findings.

The present invention includes, for example, inventions of the following aspects.
[1] A liquid composition, comprising a mixed solvent and RebD, the mixed solvent comprising, based on a total weight of the mixed solvent:
   from 50 to 95 wt.% of one or more polyhydric alcohols selected from the group consisting of glycerin, ethylene glycol, and propylene glycol; and
   from 5 to 50 wt.% of ethanol,
   in which a content of the RebD is from 1.5 to 30 wt.% based on a total weight of the liquid composition.
[2] The liquid composition according to [1], in which a ratio of the one or more polyhydric alcohols to the ethanol is from 15:1 to 1:1 by weight.
[3] The liquid composition according to [1] or [2], in which a total content of the one or more polyhydric alcohols and the ethanol is from 90 to 100 wt.% based on a total weight of the mixed solvent.
[4] The liquid composition according to any of [1] to [3], consisting essentially of the RebD, the one or more polyhydric alcohols, and the ethanol.
[5] A beverage concentrate, comprising the liquid composition according to any of [1] to [4], and from 50 to 99 wt.% of water based on a total weight of the beverage concentrate.
[6] A beverage concentrate, comprising: RebD; one or more polyhydric alcohols selected from the group consisting of glycerin, ethylene glycol, and propylene glycol; ethanol; and water,
   in which the beverage concentrate comprises, based on a total weight of the beverage concentrate:
   from 0.01 to 10 wt.% of RebD;
   from 0.4 to 50 wt.% of the one or more polyhydric alcohols; and
   from 0.4 to 25 wt.% of ethanol.
[7] The beverage concentrate according to [5] or [6], comprising one or more cyclodextrins selected from the group consisting of α-cyclodextrin, β-cyclodextrin, γ-cyclodextrin, and 2-hydroxy-γcyclodextrin.
[8] The beverage concentrate according to any of [5] to [7], comprising γ-cyclodextrin.
[9] A beverage comprising the beverage concentrate according to any of [5] to [8].
[10] A method for producing a liquid composition comprising from 1.5 to 30 wt.% of RebD based on a total weight of the liquid composition, the method comprising:
   preparing a mixed solvent comprising, based on a total weight of the mixed solvent:
      from 50 to 95 wt.% of one or more polyhydric alcohols selected from the group
   consisting of glycerin, ethylene glycol, and propylene glycol; and
      from 5 to 50 wt.% of ethanol; and
   dissolving RebD in the mixed solvent to prepare a liquid composition comprising from 1.5 to 30 wt.% of RebD based on a total weight of the liquid composition.
[11] The method according to [10], in which a ratio of the one or more polyhydric alcohols to the ethanol in the mixed solvent is from 15:1 to 1:1 by weight.
[12] A beverage, comprising:
   from 1 ppm to 700 ppm of RebD;
   from 5 ppm to 3000 ppm of one or more polyhydric alcohols selected from the group consisting of glycerin, ethylene glycol, and propylene glycol; and
   from 2 ppm to 1000 ppm of ethanol.
[13] The beverage according to [12], comprising from 1 ppm to 700 ppm of RebD, in which a ratio of the one or more polyhydric alcohols to the ethanol is from 15:1 to 1:1 by weight.
[14] The beverage according to [12] or [13], comprising one or more cyclodextrins selected from the group consisting of α-cyclodextrin, β-cyclodextrin, γ-cyclodextrin, and 2-hydroxy-γcyclodextrin.
[15] A 2- to 10-fold concentrate of the beverage according to any of [12] to [14].

### Advantageous Effects of Invention

According to an aspect of the present invention, there can be provided a liquid composition containing RebD at high concentration. According to a preferred aspect of the present invention, there can be provided a liquid composition excellent in handleability and containing RebD at high concentration. In addition, according to another aspect of the present invention, a liquid composition containing RebD at high concentration can be produced in a shorter time.

### Brief Description of Drawings

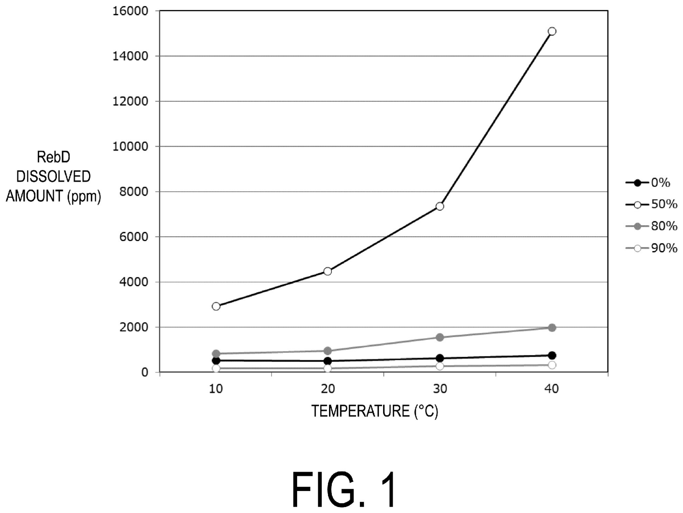

FIG. 1 is a graph indicating an amount of RebD dissolved using an ethanol water solution in Reference Example.
FIG. 2 is a graph indicating viscosities of mixed solutions containing glycerin and ethanol in Examples A.
FIG. 3 is a graph indicating changes in turbidity (NTU) from the time of sample preparation to 5 hours in Examples C.
FIG. 4 is a graph indicating dissolution times at different RebD contents and temperatures using Solvent 4 (volume ratio of glycerin to ethanol of 70:30) in Examples D.
FIG. 5 is a graph indicating observation results until RebD redeposition after adding RebD-containing liquid compositions to water in Examples E.
FIG. 6 is a graph indicating an effect of suppressing redeposition of RebD by addition of cyclodextrin in Examples F.
FIG. 7 is a graph indicating sensory evaluation results in Example G.

### Description of Embodiments

The present invention will now be described in detail. The following embodiments are examples for explaining the present invention and are not intended to limit the present invention to these embodiments only. The present invention can be implemented in various embodiments as long as the gist of the present invention is not deviated.

All literature, patent application publications, patent publications, and other patent literature cited in the present specification are incorporated herein by reference in their entirety. In addition, the present specification encompasses the contents described in the specification and drawings of the Japanese patent application, namely Application No. 2023-007188, filed in Japan on January 20, 2023, which serves as a basis for claiming priority of the present application.

In the present specification, the term "ppm" means "mass ppm" unless otherwise specified. The specific weight of a beverage is usually 1, and thus "mass ppm" can be equated with "mg/L". Note that in the present specification, "wt.%" can be equated with "mass%". In the present specification, the term "about" means that the subject is present in a range of ±25%, ±10%, ±5%, ±3%, ±2%, or ±1% of the numerical value following "about". For example, "about 10" means a range from 7.5 to 12.5.

### 1. Liquid Composition

The present invention provides, as an aspect, a liquid composition described below (hereinafter also referred to as "the liquid composition of the present invention").

A liquid composition, comprising a mixed solvent and RebD, the mixed solvent comprising, based on a total weight of the mixed solvent:
from 50 to 95 wt.% of one or more polyhydric alcohols selected from the group consisting of glycerin, ethylene glycol, and propylene glycol; and
from 5 to 50 wt.% of ethanol,
in which a content of the RebD is from 1.5 to 30 wt.% based on a total weight of the liquid composition.

The liquid composition according to an aspect of the present invention can contain RebD at high concentration and is excellent in handleability. The present inventors have dissolved RebD using glycerin and found that RebD can be contained at high concentration. However, glycerin has high viscosity and thus has poor handleability. Thus, the present inventors have found an unexpected effect in that mixing a predetermined amount of ethanol in a polyhydric alcohol such as glycerin to form a mixed solvent can reduce the viscosity and maintain the solubility of RebD at a high level. As demonstrated in Reference Example of the present specification, the solubility of RebD was not necessarily improved in an ethanol water solution. Thus, it was unexpected that mixing a polyhydric alcohol, such as glycerin, and ethanol in a predetermined ratio was able to dissolve RebD at high concentration. The liquid composition according to an aspect of the present invention can contain RebD at high concentration and thus is useful for maintaining the RebD concentration at a high level in preparing a beverage concentrate.

The liquid composition according to an aspect of the present invention is a liquid composition containing RebD and a mixed solvent containing a predetermined amount of a specific polyhydric alcohol and a predetermined amount of ethanol, in which the content of RebD is within a predetermined range. Using a mixed solvent containing a predetermined amount of a specific polyhydric alcohol and a predetermined amount of ethanol can dissolve RebD in a high concentration that is from 1.5 to 30 wt.%.

The liquid composition according to an aspect of the present invention contains one or more polyhydric alcohols selected from the group consisting of glycerin (also referred to as glycerol), ethylene glycol, and propylene glycol. The polyhydric alcohol is preferably one or more selected from glycerin, ethylene glycol, and propylene glycol, more preferably one or more selected from glycerin and ethylene glycol, and even more preferably glycerin.

The content of the one or more polyhydric alcohols selected from the group consisting of glycerin, ethylene glycol, and propylene glycol is from 50 to 95 wt.%, preferably from 52 to 93 wt.%, more preferably from 60 to 87 wt.%, and even more preferably from 62 to 80 wt.% based on a total weight of the mixed solvent. Such a range can improve the solubility of RebD while reducing the viscosity of the mixed solvent and thus is preferred. Alternatively, the content of the one or more polyhydric alcohols may be from 50 to 93 wt.%, from 50 to 90 wt.%, from 50 to 87 wt.%, from 50 to 85 wt.%, from 50 to 80 wt.%, from 50 to 75 wt.%, from 50 to 70 wt.%, from 50 to 65 wt.%, from 50 to 60 wt.%, from 50 to 55 wt.%, from 52 to 93 wt.%, from 52 to 90 wt.%, from 52 to 87 wt.%, from 52 to 85 wt.%, from 52 to 80 wt.%, from 52 to 75 wt.%, from 52 to 70 wt.%, from 52 to 65 wt.%, from 52 to 60 wt.%, from 52 to 55 wt.%, from 55 to 95 wt.%, from 55 to 93 wt.%, from 55 to 90 wt.%, from 55 to 87 wt.%, from 55 to 85 wt.%, from 55 to 80 wt.%, from 55 to 75 wt.%, from 55 to 70 wt.%, from 55 to 65 wt.%, from 55 to 60 wt.%, from 60 to 95 wt.%, from 60 to 93 wt.%, from 60 to 87 wt.%, from 60 to 85 wt.%, from 60 to 80 wt.%, from 60 to 75 wt.%, from 60 to 70 wt.%, or from 60 to 65 wt.%. Here, the total weight of the mixed solvent is a total weight of the one or more polyhydric alcohols, ethanol described later, and any other optional solvent. In the case of containing two or more polyhydric alcohols, the content of the polyhydric alcohols is a total content of the contained polyhydric alcohols. The content of the polyhydric alcohol can be measured, for example, by HPLC. Alternatively, when the added amount of the polyhydric alcohol is known, the content may be calculated from the added amounts of raw materials (and their specific gravities).

The liquid composition according to an aspect of the present invention contains ethanol. The origin of ethanol is not particularly limited, and ethanol obtained by fermentation or by chemical synthesis can be used.

The content of ethanol is from 5 to 50 wt.%, preferably from 7 to 48 wt.%, more preferably from 13 to 40 wt.%, and even more preferably from 20 to 38 wt.% based on a total weight of the mixed solvent. Such a range can improve the solubility of RebD while reducing the viscosity of the mixed solvent and thus is preferred. Alternatively, the content of ethanol may be from 7 to 50 wt.%, from 7 to 48 wt.%, from 7 to 45 wt.%, from 7 to 40 wt.%, from 10 to 50 wt.%, from 10 to 48 wt.%, from 10 to 45 wt.%, from 10 to 40 wt.%, from 13 to 50 wt.%, from 13 to 48 wt.%, from 13 to 45 wt.%, from 13 to 40 wt.%, from 15 to 50 wt.%, from 15 to 48 wt.%, from 15 to 45 wt.%, from 15 to 40 wt.%, from 20 to 50 wt.%, from 20 to 48 wt.%, from 20 to 45 wt.%, from 20 to 40 wt.%, from 25 to 50 wt.%, from 25 to 48 wt.%, from 25 to 45 wt.%, from 25 to 40 wt.%, from 30 to 50 wt.%, from 30 to 48 wt.%, from 30 to 45 wt.%, from 30 to 40 wt.%, from 35 to 50 wt.%, from 35 to 48 wt.%, from 35 to 45 wt.%, or from 35 to 40 wt.%. The content of ethanol can be measured, for example, by HPLC. Alternatively, when the added amount of ethanol is known, the content may be calculated from the added amounts of raw materials (and their specific gravities).

In another aspect of the present invention, the mixed solvent of one or more polyhydric alcohols selected from the group consisting of glycerin, ethylene glycol, and propylene glycol; and ethanol may be obtained by mixing the polyhydric alcohol and ethanol at a volume ratio from 90:10 to 40:60. The volume ratio is preferably from 80:20 to 50:50 and more preferably from 75:25 to 55:45. In the case of containing two or more polyhydric alcohols, the volume of the polyhydric alcohols is a total volume of the polyhydric alcohols to be mixed.

The mixed solvent may contain a solvent other than the one or more polyhydric alcohols and ethanol. Examples of such an optional solvent include one or more solvents selected from polyhydric alcohols other than glycerin, ethylene glycol, and propylene glycol, monohydric alcohols other than ethanol, and water. Examples of such a polyhydric alcohol include dihydric or trihydric alcohols other than those described above. In addition, examples of the monohydric alcohol include propanol, isopropanol, butanol, isobutanol, 2-butanol, and 2-methyl-2-propanol. The water is not particularly limited, and tap water, ion-exchanged water, purified water, pure water, or equivalents thereof can be used.

The mixed solvent contained in the liquid composition in an aspect of the present invention consists essentially of one or more polyhydric alcohols selected from the group consisting of glycerin, ethylene glycol, and propylene glycol; and ethanol. In the present specification, "consisting essentially of" means that the mixed solvent used in the present invention can contain a small amount of a solvent other than the one or more polyhydric alcohols and ethanol. For example, when the mixed solvent consists essentially of the one or more polyhydric alcohols and ethanol, a total content of the one or more polyhydric alcohols and ethanol means preferably from 85 to 100 wt.%, more preferably from 90 to 100 wt.%, and even more preferably from 95 to 100 wt.% based on a total weight of the mixed solvent. When a total content of the one or more polyhydric alcohols and ethanol is 100 wt.% based on a total weight of the mixed solvent, this means that the mixed solvent is composed of the one or more polyhydric alcohols and ethanol, and a content of any other optional solvent is an impurity amount (less than 1 wt.%).

In a preferred aspect of the present invention, a ratio of the one or more polyhydric alcohols to the ethanol is from 15:1 to 1:1 by weight, preferably from 10:1 to 1.5:1, and more preferably from 7:1 to 2:1. The ratio within this range is preferred, for RebD can be dissolved at a higher concentration.

The origin of rebaudioside D (RebD) contained in the liquid composition according to an aspect of the present invention is not particularly limited, and rebaudioside D isolated and purified from a plant, rebaudioside D obtained by biosynthesis, or rebaudioside D obtained by chemical synthesis can be used.

The liquid composition according to an aspect of the present invention may contain a steviol glycoside other than RebD and, for example, may further contain one or more steviol glycosides selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, dulcoside A, dulcoside C, rubusoside, steviol, steviolmonoside, steviolbioside, and stevioside.

In an aspect of the present invention, the content of RebD is from 1.5 to 30 wt.% based on a total weight of the liquid composition. In the present specification, a total weight of the liquid composition means a total weight of the mixed solvent, RebD, and an optional component. Examples of the optional component include added amounts of the steviol glycosides other than RebD described above, and preservatives and the like. The content of RebD is from 1.5 to 30 wt.% based on a total weight of the liquid composition, preferably from 5 to 20 wt.%, and more preferably from 8 to 19 wt.%. Alternatively, it may be from 1.5 to 25 wt.%, from 1.5 to 20 wt.%, from 1.5 to 19 wt.%, from 1.5 to 18 wt.%, from 1.5 to 16 wt.%, from 1.5 to 14 wt.%, from 1.5 to 12 wt.%, from 3 to 20 wt.%, from 3 to 19 wt.%, from 3 to 18 wt.%, from 3 to 16 wt.%, from 3 to 14 wt.%, from 3 to 12 wt.%, from 5 to 20 wt.%, from 5 to 19 wt.%, from 5 to 18 wt.%, from 5 to 16 wt.%, from 5 to 14 wt.%, from 5 to 12 wt.%, from 8 to 20 wt.%, from 8 to 19 wt.%, from 8 to 18 wt.%, from 8 to 16 wt.%, from 8 to 14 wt.%, or from 8 to 12 wt.%. The content of RebD can be measured, for example, by HPLC. Alternatively, when the added amount of RebD is known, the content may be calculated from the added amounts of raw materials.

In another aspect of the present invention, the content of RebD is from 1.5 to 30 w/v% relative to a total volume of the liquid composition. Note that, when the content of RebD is 1.5 w/v% relative to the volume of the liquid composition, it means that 1.5 mg of RebD is contained in 100 mL of the liquid composition. The content of RebD is from 1.5 to 30 w/v% relative to a total volume of the liquid composition, preferably from 5 to 25 w/v%, and more preferably from 8 to 20 w/v%. Alternatively, it may be from 1.5 to 25 w/v%, from 1.5 to 20 w/v%, from 1.5 to 19 w/v%, from 1.5 to 18 w/v%, from 1.5 to 16 w/v%, from 1.5 to 14 w/v%, from 1.5 to 12 w/v%, from 3 to 20 w/v%, from 3 to 18 w/v%, from 3 to 16 w/v%, from 3 to 14 w/v%, from 3 to 12 w/v%, from 5 to 25 w/v%, from 5 to 20 w/v%, from 5 to 18 w/v%, from 5 to 16 w/v%, from 5 to 14 w/v%, from 5 to 12 w/v%, from 8 to 20 w/v%, from 8 to 18 w/v%, from 8 to 16 w/v%, from 8 to 14 w/v%, or from 8 to 12 w/v%. The content of RebD can be measured, for example, by HPLC. Alternatively, when the added amount of RebD is known, the content may be calculated from the added amounts of raw materials.

The liquid composition in a preferred aspect of the present invention consists essentially of RebD; one or more polyhydric alcohols selected from the group consisting of glycerin, ethylene glycol, and propylene glycol; and ethanol. This means that the liquid composition in a preferred aspect of the present invention can contain a small amount of a component other than RebD, the one or more polyhydric alcohols, and ethanol. This includes, for example, containing any other optional solvent in the mixed solvent, as well as containing an optional component other than RebD. When the liquid composition consists essentially of RebD, the one or more polyhydric alcohols, and ethanol, a total content of RebD, the one or more polyhydric alcohols, and ethanol means preferably from 85 to 100 wt.%, more preferably from 90 to 100 wt.%, and even more preferably from 95 to 100 wt.% based on a total weight of the liquid composition. When a total content of RebD, the one or more polyhydric alcohols, and ethanol is 100 wt.% based on a total weight of the liquid composition, this means that the liquid composition is composed of RebD, the one or more polyhydric alcohols, and ethanol, and a content of any other optional solvent and/or solute is an impurity amount (less than 1 wt.%).

The viscosity of the liquid composition is not particularly limited but is, for example, from about 1 to about 600 mPa·s, preferably from about 1 to about 400 mPa·s, and more preferably from about 1 to about 300 mPa·s when measured at 20 to 25°C. The viscosity can be measured with a viscometer (e.g., the one used in Examples). In general, the liquid composition with lower viscosity has excellent handleability and thus is preferred.

### 2. Method for Producing Liquid Composition

The present invention provides includes an aspect that provides a method for producing a liquid composition described below (hereinafter also referred to as "the method for producing a liquid composition of the present invention").

A method for producing a liquid composition comprising from 1.5 to 30 wt.% of RebD based on a total weight of the liquid composition, the method comprising:
preparing a mixed solvent comprising, based on a total weight of the mixed solvent:
   from 50 to 95 wt.% of one or more polyhydric alcohols selected from the group
consisting of glycerin, ethylene glycol, and propylene glycol; and
   from 5 to 50 wt.% of ethanol; and
dissolving RebD in the mixed solvent to prepare a liquid composition comprising from 1.5 to 30 wt.% of RebD based on a total weight of the liquid composition.

As long as the mixed solvent contains the one or more polyhydric alcohols and ethanol, any other optional solvent can be contained, as desired. The order of mixing these solvents is not particularly limited. Note that a total amount of these solvents may be mixed at once, or the solvents may be mixed stepwise in small amounts. For any other optional solvent, those described in the section of Liquid Composition can be used.

The mixed solvent used in the method for producing a liquid composition in an aspect of the present invention consists essentially of: one or more polyhydric alcohols selected from the group consisting of glycerin, ethylene glycol, and propylene glycol; and ethanol. The one or more polyhydric alcohols and ethanol can be mixed so as to give the content described in the section "1. Liquid Composition".

In a preferred aspect of the present invention, a ratio of the one or more polyhydric alcohols to the ethanol is from 15:1 to 1:1 by weight, preferably from 10:1 to 1.5:1, and more preferably from 7:1 to 2:1. The ratio within this range is preferred, for RebD can be dissolved at a higher concentration.

In another preferred aspect of the present invention, the one or more polyhydric alcohols and the ethanol may be mixed at a volume ratio from 90:10 to 40:60, preferably from 80:20 to 50:50, and more preferably from 75:25 to 55:45. The ratio within this range is preferred, for RebD can be dissolved at a higher concentration.

The method for producing a liquid composition according to an aspect of the present invention has a higher rate of dissolution of RebD in a solvent than a case of using a single solvent, glycerin. Thus, the present method is preferred in terms of being able to produce the liquid composition containing RebD at high concentration in a shorter period of time. This improves the production efficiency.

In an aspect of the present invention, a content of RebD in the liquid composition to be obtained is from 1.5 to 30 wt.% based on a total weight of the liquid composition. RebD can be added and dissolved in such a manner that its content is from 1.5 to 30 wt.%, preferably from 5 to 20 wt.%, and more preferably from 8 to 19 wt.% based on a total weight of the liquid composition. Alternatively, based on a total weight of the liquid composition, RebD may be added to and dissolved in the mixed solvent in such a manner that the content is from 1.5 to 25 wt.%, from 1.5 to 20 wt.%, from 1.5 to 19 wt.%, from 1.5 to 18 wt.%, from 1.5 to 16 wt.%, from 1.5 to 14 wt.%, from 1.5 to 12 wt.%, from 3 to 20 wt.%, from 3 to 19 wt.%, from 3 to 18 wt.%, from 3 to 16 wt.%, from 3 to 14 wt.%, from 3 to 12 wt.%, from 5 to 20 wt.%, from 5 to 19 wt.%, from 5 to 18 wt.%, from 5 to 16 wt.%, from 5 to 14 wt.%, from 5 to 12 wt.%, from 8 to 20 wt.%, from 8 to 19 wt.%, from 8 to 18 wt.%, from 8 to 16 wt.%, from 8 to 14 wt.%, or from 8 to 12 wt.%.

In the method for producing a liquid composition according to an aspect of the present invention, a temperature at which RebD is dissolved is not particularly limited, but RebD can be dissolved in the mixed solvent at a temperature, for example, lower than 55°C, lower than 50°C, lower than 45°C, lower than 40°C, or lower than 35°C. The method for producing a liquid composition according to another aspect of the present invention dissolves RebD in the mixed solvent essentially without heating. In the present specification, "essentially without heating" means not including a process of intentionally supplying heat from the outside by a heating device such as a heater, and this does not exclude a production method in which heating occurs due to heat of dissolution, heat generated during the operation of a production apparatus, or heat due to the influence of the outside air temperature.

In the production method of the present invention, as for "RebD", "one or more polyhydric alcohols", "ethanol", "steviol glycoside other than RebD", and "optional component other than RebD", those described in the section "1. Liquid Composition" can be used.

### 3. Beverage Concentrate

The present invention provides, as an aspect, a beverage concentrate comprising: RebD; one or more polyhydric alcohols selected from the group consisting of glycerin, ethylene glycol, and propylene glycol; ethanol; and water (hereinafter also referred to as "the beverage concentrate of the present invention"). The beverage concentrate is intended to be diluted with water or carbonated water to prepare a beverage and is also referred to as a syrup.

A beverage concentrate according to an aspect of the present invention is a beverage concentrate containing the liquid composition according to an aspect of the present invention and from 50 to 99 wt.% of water based on a total weight of the beverage concentrate.

A beverage concentrate according to another aspect of the present invention is a beverage concentrate containing: RebD; one or more polyhydric alcohols selected from the group consisting of glycerin, ethylene glycol, and propylene glycol; ethanol; and water, in which the beverage concentrate contains, based on a total weight of the beverage concentrate: from 0.01 to 10 wt.% of RebD; from 0.4 to 50 wt.% of the one or more polyhydric alcohols; and from 0.4 to 25 wt.% of ethanol. This beverage concentrate may be obtained by mixing the liquid composition according to an aspect of the present invention and from 50 to 99 wt.% of water based on a total weight of the beverage concentrate.

A beverage concentrate according to yet another aspect of the present invention is made into a beverage described in the section "5. Beverage" described later by dilution with water or carbonated water. Generally, the dilution with water or carbonated water only increases the amount of water in a beverage concentrate, and thus RebD, the one or more polyhydric alcohols, and ethanol in the beverage concentrate are maintained. Thus, for example, when a beverage is prepared by two-fold dilution with water, a beverage concentrate with the composition of the beverage described later is a beverage concentrate containing RebD, the one or more polyhydric alcohols, and ethanol at about twice the concentrations of those in the beverage described later. According to a preferred aspect, a 1.5- to 20-fold concentrate, a 2- to 15-fold concentrate, a 2- to 10-fold concentrate, or a 4- to 8-fold concentrate of the beverage described later is provided.

The amount of water contained in the beverage concentrates in some aspects of the present invention is from 50 to 99 wt.% based on a total weight of the beverage concentrate. In a preferred aspect, the amount of water may be from 60 to 99 wt.%, from 70 to 97 wt.%, from 75 to 95 wt.%, or from 80 to 90 wt.% based on a total weight of the beverage concentrate. When the added amount of water is known, the content of water can be calculated from the added amounts of raw materials (and their specific gravities).

The amount of the one or more polyhydric alcohols contained in the beverage concentrates in some aspects of the present invention is from 0.4 to 50 wt.% based on a total weight of the beverage concentrate. In a preferred aspect, the amount of the one or more polyhydric alcohols may be from 1 to 40 wt.%, from 2 to 30 wt.%, from 5 to 25 wt.%, from 8 to 20 wt.%, or from 10 to 15 wt.% based on a total weight of the beverage concentrate. In the case of containing two or more polyhydric alcohols, the content of the polyhydric alcohols is a total content of the contained polyhydric alcohols. The content of the polyhydric alcohol can be measured, for example, by HPLC. Alternatively, when the added amount of the polyhydric alcohol is known, the content may be calculated from the added amounts of raw materials (and their specific gravities).

The amount of ethanol contained in the beverage concentrates in some aspects of the present invention is from 0.4 to 25 wt.% based on a total weight of the beverage concentrate. In a preferred aspect, the amount of ethanol may be from 0.6 to 20 wt.%, from 0.8 to 15 wt.%, from 1 to 15 wt.%, from 1.5 to 10 wt.%, or from 2 to 6 wt.% based on a total weight of the beverage concentrate. The content of ethanol can be measured, for example, by HPLC. Alternatively, when the added amount of ethanol is known, the content may be calculated from the added amounts of raw materials (and their specific gravities).

The amount of RebD contained in the beverage concentrates in some aspects of the present invention is from 0.01 to 10 wt.% based on a total weight of the beverage concentrate. In a preferred aspect, the amount of RebD may be from 0.1 to 8 wt.%, from 0.2 to 5 wt.%, from 0.5 to 4 wt.%, from 1 to 3 wt.%, or from 0.05 to 0.5 wt.% based on a total weight of the beverage concentrate. The content of RebD can be measured, for example, by HPLC. Alternatively, when the added amount of RebD is known, the content may be calculated from the added amounts of raw materials.

The beverage concentrates according to some aspects of the present invention contains one or more cyclodextrins selected from the group consisting of α-cyclodextrin, β-cyclodextrin, γ-cyclodextrin, and 2-hydroxy-ycyclodextrin. The beverage concentrate according to a preferred aspect of the present invention contains γ-cyclodextrin. Containing the one or more cyclodextrins is preferred in terms of preventing recrystallization (redeposition) of RebD. Without wishing to be bound by theory, it is presumed that cyclodextrin stabilizes the dissolved state of RebD in a solution.

The content of the one or more cyclodextrins is not particularly limited, but a weight ratio with the amount of RebD contained in the beverage concentrate (RebD:cyclodextrin) is preferably from 1:0.05 to 1:5, more preferably from 1:0.1 to 1:3, even more preferably from 1:0.2 to 1:3, particularly preferably from 1:0.4 to 1:1.5, from 1:0.5 to 1:1.4, or from 1:0.6 to 1:1.3.

The beverage concentrates according to some aspects of the present invention may further contain another sweetener. Examples of such another sweetener include: a natural sweetener including saccharose (sucrose), fructose-glucose syrup, mogroside V, xylitol, corn syrup, fructose, sugar, glucose, malt sugar, high-fructose syrup, a sugar alcohol (such as xylitol and erythritol), an oligosaccharide, honey, sugarcane juice (molasses), starch syrup, monk fruit (*Siraitia grosvenorii*) powder, monk fruit extract, licorice powder, licorice extract, *Thaumatococcus danielli* seed powder, and *Thaumatococcus danielli* seed extract; and an artificial sweetener including acesulfame potassium, sucralose, neotame, aspartame, and saccharine. Among these, a natural sweetener is preferably used from the viewpoint of offering refreshing taste, easy drinkability, natural flavor, and a moderate richness, and in particular, fructose, glucose, malt sugar, sucrose, and/or sugar is suitably used. Only one of these sweetening components may be used or a plurality of these may be used in combination.

The beverage concentrates according to some aspects of the present invention can be diluted at any ratio and used in beverages. Note that, they can be diluted with water or carbonated water for use to 2 times, 3 times, 4 times, 5 times, 6 times, 7 times, 8 times, 9 times, or 10 times the original concentrations. In addition, the beverage concentrates are concentrated and thus are preferred in terms of storability and transportability. Liquid concentrates according to some aspects of the present invention contain RebD at high concentration and thus can be diluted at a high ratio when a beverage is prepared, which is thus preferred. The beverage concentrates are preferably in liquid form.

The amount of soluble solids contained in the beverage concentrates according to some aspects of the present invention may be more than 15% and 50% or less, from 20 to 50%, from 25 to 50%, from 30 to 50%, from 35 to 50%, from 40 to 50%, from 20 to 40%, from 25 to 40%, from 30 to 40%, from 20 to 35%, or from 20 to 30%. The amount of soluble solids contained in the concentrate can be measured using a saccharimeter (refractometer).

In the beverage concentrates according to the present invention, as for "RebD", "one or more polyhydric alcohols", "ethanol", "steviol glycoside other than RebD", and "optional component other than RebD", those described in the section "1. Liquid Composition" can be used.

### 4. Method for Producing Beverage Concentrate

The present invention provides, as an aspect, a method for producing a beverage concentrate comprising: RebD; one or more polyhydric alcohols selected from the group consisting of glycerin, ethylene glycol, and propylene glycol; ethanol; and water (hereinafter also referred to as "the method for producing a beverage concentrate of the present invention").

The method for producing a beverage concentrate in an aspect of the present invention includes adding water to the liquid composition of the present invention. According to a preferred aspect of the present invention, the method includes adding water to the liquid composition of the present invention to obtain a beverage concentrate containing from 0.01 to 10 wt.% of RebD, from 0.4 to 50 wt.% of one or more polyhydric alcohols selected from the group consisting of glycerin, ethylene glycol, and propylene glycol, and from 0.4 to 2 wt.% of ethanol based on a total weight of the beverage concentrate. The method for producing a beverage concentrate according to another aspect of the present invention includes adding RebD, one or more polyhydric alcohols selected from the group consisting of glycerin, ethylene glycol, and propylene glycol, and ethanol to water to obtain a beverage concentrate containing from 0.01 to 10 wt.% of RebD, from 0.4 to 50 wt.% of the one or more polyhydric alcohols selected from the group consisting of glycerin, ethylene glycol, and propylene glycol, and from 0.4 to 25 wt.% of ethanol based on a total weight of the beverage concentrate.

One or more cyclodextrins selected from the group consisting of α-cyclodextrin, β-cyclodextrin, γ-cyclodextrin, and 2-hydroxy-ycyclodextrin may be added after the above-described steps or simultaneously with the above-described steps.

Furthermore, another sweetener may be further added after the above-described steps process or simultaneously with the above-described steps. For such another sweetener, those described in the section "3. Beverage Concentrate" can be used.

After the beverage concentrate is obtained, a beverage may be immediately prepared in a subsequent process, or the beverage concentrate may be transported in the beverage concentrate state.

### 5. Beverage

The present invention provides, as an aspect, a beverage comprising: RebD; one or more polyhydric alcohols selected from the group consisting of glycerin, ethylene glycol, and propylene glycol; ethanol; and water (hereinafter also referred to as "the beverage of the present invention").

The beverage according to an aspect of the present invention is a beverage containing the beverage concentrate according to an aspect of the present invention.

The beverage according to another aspect of the present invention is a beverage containing: from 1 to 700 ppm of RebD; from 5 to 3000 ppm of one or more polyhydric alcohols selected from the group consisting of glycerin, ethylene glycol, and propylene glycol; and from 2 to 1000 ppm of ethanol. The beverage may be obtained by diluting the beverage concentrate according to an aspect of the present invention with water.

The beverage according to a preferred aspect of the present invention has taste qualities closer to those of sugar than a RebD-containing beverage containing neither one or more polyhydric alcohols selected from the group consisting of glycerin, ethylene glycol, and propylene glycol, nor ethanol in one or more sensory evaluation items selected from the group consisting of "onset of sweetness", "sweetness intensity", "lingering sweetness", "bitterness intensity", and "lingering bitterness".

The amount of RebD contained in the beverages in some aspects of the present invention may be, for example, from 10 to 50 ppm, from 50 to 600 ppm, from 50 to 200 ppm, from 100 to 300 ppm, or from 200 to 500 ppm.

The amount of the one or more polyhydric alcohols contained in the beverages in some aspects of the present invention may be, for example, from 10 to 3000 ppm, from 50 to 2800 ppm, from 100 to 2700 ppm, from 500 to 2500 ppm, or from 800 to 2000 ppm.

The amount of ethanol contained in the beverages in some aspects of the present invention may be, for example, from 10 to 1000 ppm, from 50 to 900 ppm, from 100 to 800 ppm, from 150 to 700 ppm, or from 200 to 600 ppm.

The beverages in some aspects of the present invention may further contain one or more cyclodextrins selected from the group consisting of α-cyclodextrin, β-cyclodextrin, γ-cyclodextrin, and 2-hydroxy-γcyclodextrin. γcyclodextrin is preferably contained. The amount of a cyclodextrin contained in the beverages may be, for example, from 1 to 700 ppm, from 10 to 50 ppm, from 50 to 600 ppm, from 50 to 200 ppm, from 100 to 300 ppm, or from 200 to 500 ppm.

The beverages according to some aspects of the present invention further contain one or more selected from the group consisting of RebA, RebB, RebC, RebE, RebF, RebG, RebI, RebJ, RebK, RebM, RebN, RebO, RebQ, RebR, RebV, RebW, RebKA, dulcoside A, rubusoside, steviol, steviolmonoside, steviolbioside, stevioside, sucrose, fructose-glucose syrup, erythritol, mogroside V, corn syrup, aspartame, sucralose, acesulfame potassium, saccharin, and xylitol.

Examples of the beverages of the present invention include, but are not particularly limited to, for example, carbonated beverages, non-carbonated beverages, alcoholic beverages, non-alcoholic beverages, coffee beverages, tea beverages, cocoa beverages, nutritional beverages, functional beverages, fruit/vegetable-based beverages, and milk-based beverages.

The beverages according to some aspects of the present invention may be non-alcoholic beverages or alcoholic beverages. In the present specification, the non-alcoholic beverage means a beverage with an alcohol content of less than 1 v/v% in accordance with Article 2 of the Liquor Tax Law of Japan. In the present specification, the alcoholic beverage is a beverage with an alcohol content of 1 v/v% or more. The "alcohol" referred to here means ethyl alcohol (ethanol), unless otherwise specified. The alcohol content of the alcoholic beverage of the present invention is not particularly limited. The alcoholic beverage according to an aspect of the present invention has an alcohol content of 1 to 60 v/v%. In the present specification, the alcohol content is indicated by percentage on a volume/volume basis (v/v%). In addition, the alcohol content of the beverage can be measured by a method specified by the National Tax Agency of Japan. For example, the alcohol content can be measured with a vibration densitometer. Specifically, the alcohol content can be determined by preparing a sample from the beverage by removing carbon dioxide gas through filtration or with ultrasonic wave, distilling the sample, measuring the density of the resulting distillate at 15°C, and converting the density using "Table 2. Conversion Table of Alcohol Content, Density (15°C), and Specific Gravity (15/15°C)", which is an attached table of the Official Analysis Method of the National Tax Agency (2007 (Hei19) National Tax Agency Order No. 6, revised on June 22, 2007). Alternatively, when the alcohol content of liquor used is known, the alcohol content can be calculated from the alcohol content and added amount of the liquor.

The alcohol component used in the alcoholic beverage of the present invention is not particularly limited. Any raw material may be used as long as it is a drinkable alcohol component, such as sake, shochu, beer, fruit alcoholic beverage (red wine or white wine made from grape, or a brewed alcoholic beverage made from fruit other than grape (pineapple, apple, pear, peach, loquat, strawberry, cherry, pomegranate, quince, Japanese apricot (*Prunus mume*), or gooseberry)), sweet fruit alcoholic beverage, whiskey, brandy, raw material alcohols, spirits, liqueur (including Japanese apricot liqueur (umeshu)), or a brewed alcoholic beverage made from blackstrap molasses or the like. The alcoholic beverage in an aspect of the present invention contains a distilled alcoholic beverage, a brewed alcoholic beverage, an infused alcoholic beverage, or combinations thereof. Examples of the brewed alcoholic beverage include Japanese sake, beer, and various fruit alcoholic beverage, such as, for example, red wine and/or white wine made from grape, brewed alcoholic beverage made from fruit other than grape (pineapple, apple, pear, peach, loquat, strawberry, cherry, pomegranate, quince, Japanese apricot, or gooseberry), and brewed alcoholic beverage made from blackstrap molasses. Examples of the distilled alcoholic beverage include shochu, whiskey, brandy, raw material alcohols, spirits, vodka, gin, tequila, and rum. In addition, examples of the infused alcoholic beverage include Japanese apricot liqueur and infused alcoholic beverage made from fruit other than Japanese apricot (citrus fruit, such as orange; pome fruit, such as apple; stone fruit, such as peach; or tropical and subtropical fruit, such as mango).

The sweetness intensity of the beverage of the present invention is not particularly limited but is preferably from 3 to 15, more preferably from 5 to 13, and even more preferably from 7 to 11. In the present specification, the term "sweetness intensity" means the intensity of sweetness exhibited by a substance. In the present specification, the sweetness intensity can be expressed by a sucrose equivalent value (SEV). For example, in the present specification, when the sweetness intensity exhibited by sucrose per unit concentration Brix 1 is defined as 1, the sweetness of sucrose is 1, and RebA has a sweetness of about 200 to about 450, RebD has a sweetness of about 200 to about 300, and RebM has a sweetness of about 200 to about 300. A numerical value obtained by multiplying the sweetness of these by the concentration (w/v% (which can be equated with w/w% in the case of a beverage)) of the sweetener in the beverage of the present invention is the sweetness intensity of the beverage of the present invention. When the sweetness intensity is calculated in the present invention, for a high-intensity sweetener with a wide range of sweetness, its central value is used, unless otherwise specified. In addition, the sweetness intensity of the beverage of the present invention does not need to be derived only from the steviol glycoside, and in the case where the beverage contains any other optional sweetener described later, the sweetness intensity is a total value of the sweetness intensities derived from the steviol glycoside and these sweeteners. For example, the sweetness of a monk fruit extract is from about 110 to about 150 (central value is about 130), the sweetness of mogroside V is from about 240 to about 300 (central value is about 270), and the sweetness of thaumatin is about 2000. For example, the sweetness of glucose is from about 0.6 to about 0.7 (central value is about 0.65), and a numerical value obtained by multiplying the sweetness by the concentration Brix value of glucose is the sweetness intensity of a glucose solution. Thus, when the glucose concentration is a Brix of 1.5, the sweetness intensity of the glucose solution is 0.65 x 1.5 = 0.975.

A relative ratio of the sweetness of another sweetener to the sweetness of sucrose of 1 can be determined from a known sugar sweetness conversion table or the like. For example, when the sweetness of sucrose is 1, glucose has a sweetness of about 0.6 to about 0.7, fructose has a sweetness of about 1.3 to about 1.7, maltose has a sweetness of about 0.4, fructooligosaccharide has a sweetness of about 0.6, maltooligosaccharide has a sweetness of about 0.3, isomaltooligosaccharide has a sweetness of about 0.4 to about 0.5, galactooligosaccharide has a sweetness of about 0.7, lactose has a sweetness of about 0.2 to about 0.3, psicose has a sweetness of about 0.7, allose has a sweetness of about 0.8, tagatose has a sweetness of about 0.9, and fructose-glucose syrup has a sweetness of about 0.75. For a sweetener whose relative ratio of the sweetness to the sweetness of sucrose of 1 is unknown or whose value varies depending on literature, the relative ratio of the sweetness to the sweetness of sucrose of 1 may be determined by a sensory test. Examples of such a sensory test include a method in which samples are prepared by adding sugar to pure water so that the sweetness intensity ranges from 3.0 to 5.0 in increments of 0.5, and a sugar-added sample with a sweetness intensity equivalent to that of an aqueous solution of a sweetener with a predetermined concentration is selected from the samples.

In some aspects of the present invention, the sweetness intensity of the beverage may be 10 or less, 9 or less, 8 or less, 7 or less, 6 or less, or 5 or less, and for example, from 4 to 10, from 4 to 9, from 4 to 8, from 4 to 7, from 4 to 6, from 4 to 5, from 5 to 10, from 5 to 9, from 5 to 8, from 5 to 7, from 5 to 6, from 6 to 10, from 6 to 9, from 6 to 8, or from 6 to 7. In yet another aspect of the present invention, the sweetness intensity of the beverage may be from 10 to 15, from 11 to 15, from 12 to 15, from 13 to 15, from 14 to 15, from 10 to 14, from 10 to 13, from 10 to 12, or from 10 to 11.

The energy (total energy amount) of the beverages of some aspects of the present invention is not particularly limited but can be from about 5 to about 100 kcal/100 mL, from about 20 to about 80 kcal/100 mL, or from about 25 to about 70 kcal/100 mL. The energy of sweetening substances and/or alcohol is known or can be determined by measuring the content with HPLC or the like and multiplying it by an energy conversion factor or by measuring physical combustion heat with a calorimeter (e.g., such as a bomb calorimeter) and correcting this with a digestibility coefficient, an amount of heat excreted, or the like.

The beverage of the present invention may be prepared as a packaged beverage in a state of being heat-sterilized and packaged in a container. The container is not particularly limited, and examples include a PET bottle, an aluminum can, a steel can, a paper pack, a chilled cup, and a bottle. In the case of performing heat sterilization, its type is not particularly limited, and the heat sterilization can be performed, for example, using a common method, such as UHT sterilization and retort sterilization. The temperature of the heat sterilization process is not particularly limited and is, for example, from 65 to 130°C and preferably from 85 to 120°C for 10 to 40 minutes. However, if a sterilization value equivalent to that in the conditions described above is obtained, sterilization at an appropriate temperature for several seconds, for example, from 5 to 30 seconds, is also acceptable.

In the beverage of the present invention, as for "RebD", "one or more polyhydric alcohols", "ethanol", "steviol glycoside other than RebD", and "optional component other than RebD", those described in the section "1. Liquid Composition" can be used.

### 6. Method for Producing Beverage

The present invention provides, as an aspect, a method for producing a beverage comprising: RebD; one or more polyhydric alcohols selected from the group consisting of glycerin, ethylene glycol, and propylene glycol; ethanol; and water (hereinafter also referred to as "the method for producing a beverage of the present invention").

The method for producing a beverage in an aspect of the present invention includes adding water to the beverage concentrate of the present invention. According to a preferred aspect of the present invention, the method includes adding water to the beverage concentrate of the present invention to obtain a beverage containing: from 1 ppm to 700 ppm of RebD; from 5 ppm to 3000 ppm of one or more polyhydric alcohols selected from the group consisting of glycerin, ethylene glycol, and propylene glycol; and from 2 ppm to 1000 ppm of ethanol. A method for producing a beverage in another aspect of the present invention includes adding RebD, the one or more polyhydric alcohols, and ethanol to water to obtain a beverage containing from 1 ppm to 700 ppm of RebD, from 5 ppm to 3000 ppm of one or more of the polyhydric alcohols, and from 2 ppm to 1000 ppm of ethanol.

The methods for producing a beverage in some aspects of the present invention further include blending a low-intensity sweetener or a high-intensity sweetener other than RebD. Blending various low-intensity sweeteners or high-intensity sweeteners other than RebD allows adjustment of taste qualities, adjustment of calories, and the like. For the low-intensity sweetener or the high-intensity sweetener other than RebD that can be blended, those described in the section "5. Beverage" can be appropriately used.

The production methods according to some aspects of the present invention may include a packaging step and a subsequent sterilization step. Packaging can be performed by any known method. In the case of performing heat sterilization after packaging, its type is not particularly limited, and the heat sterilization can be performed, for example, using a common method, such as UHT sterilization and retort sterilization. The temperature of the heat sterilization process is not particularly limited and is, for example, from 50 to 130°C and preferably from 50 to 120°C for 10 to 40 minutes. However, if a sterilization value equivalent to that in the conditions described above is obtained, sterilization at an appropriate temperature for several seconds, for example, from 5 to 30 seconds, is also acceptable.

### Exemplary Aspects of Present Invention

Exemplary aspects of the present invention will be described below, but the present invention is not limited to the following aspects.

According to an aspect of the present invention, there is provided a liquid composition comprising a mixed solvent and RebD, the mixed solvent comprising, based on a total weight of the mixed solvent:
from 60 to 87 wt.% of glycerin; and
from 13 to 40 wt.% of ethanol,
in which a content of the RebD is from 1.5 to 30 wt.%, preferably from 5 to 20 wt.%, and more preferably from 8 to 19 wt.% based on a total weight of the liquid composition.

According to an aspect of the present invention, there is provided a liquid composition comprising a mixed solvent and RebD, the mixed solvent comprising, based on a total weight of the mixed solvent:
from 60 to 87 wt.% of glycerin; and
from 13 to 40 wt.% of ethanol,
in which a content of the RebD is from 1.5 to 30 w/v%, preferably from 5 to 25 w/v%, and more preferably from 8 to 20 w/v% per volume of the liquid composition.

According to an aspect of the present invention, there is provided a liquid composition comprising a mixed solvent and RebD, the mixed solvent comprising, based on a total weight of the mixed solvent:
from 60 to 87 wt.% of glycerin; and
from 13 to 40 wt.% of ethanol,
   in which a content of the RebD is from 1.5 to 30 wt.%, preferably from 5 to 20 wt.%, and more preferably from 8 to 19 wt.% based on a total weight of the liquid composition, and
a total content of the one or more polyhydric alcohols and the ethanol is from 90 to 100 wt.% based on a total weight of the mixed solvent.

According to an aspect of the present invention, there is provided a method for producing a liquid composition comprising from 1.5 to 30 wt.%, preferably from 5 to 20 wt.%, and more preferably from 8 to 19 wt.% of RebD based on a total weight of the liquid composition, the method comprising:
preparing a mixed solvent comprising, based on a total weight of the mixed solvent:
   from 60 to 87 wt.% of glycerin; and
   from 13 to 40 wt.% of ethanol; and
dissolving RebD in the mixed solvent to prepare a liquid composition comprising from 1.5 to 30 wt.%, preferably from 5 to 20 wt.%, and more preferably from 8 to 19 wt.% of RebD based on a total weight of the liquid composition.

According to an aspect of the present invention, there is provided a method for producing a liquid composition comprising from 5 to 20 wt.% of RebD based on a total weight of the liquid composition, the method comprising:
preparing a mixed solvent comprising, based on a total weight of the mixed solvent:
   from 60 to 87 wt.% of glycerin; and
   from 13 to 40 wt.% of ethanol; and
dissolving RebD in the mixed solvent to prepare a liquid composition comprising from 5 to 20 wt.% of RebD based on a total weight of the liquid composition,
in which RebD is dissolved in the mixed solvent at a temperature lower than 55°C, lower than 50°C, lower than 45°C, lower than 40°C, or lower than 35°C.

According to an aspect of the present invention, there is provided a beverage concentrate comprising RebD, glycerin, ethanol, and water, the beverage concentrate comprising, based on a total weight of the beverage concentrate:
from 0.2 to 5 wt.% of RebD;
from 5 to 25 wt.% of glycerin; and
from 0.4 to 25 wt.%, preferably from 0.6 to 20 wt.%, and more preferably from 1 to 15 wt.% of ethanol.

According to an aspect of the present invention, there is provided a beverage concentrate comprising RebD, glycerin, ethanol, γ-cyclodextrin, and water, the beverage concentrate comprising, based on a total weight of the beverage concentrate:
from 0.2 to 5 wt.% of RebD;
from 5 to 25 wt.% of glycerin; and
from 0.4 to 25 wt.%, preferably from 0.6 to 20 wt.%, and more preferably from 1 to 15 wt.% of ethanol,
in which a weight ratio with the amount of RebD comprised in the beverage concentrate (RebD:y-cyclodextrin) is from 1:0.05 to 1:5.

According to an aspect of the present invention, there is provided a beverage comprising:
from 50 to 600 ppm of RebD;
from 100 to 2700 ppm of glycerin; and
from 100 to 800 ppm of ethanol.

According to an aspect of the present invention, there is provided a beverage comprising:
from 50 to 600 ppm of RebD;
from 100 to 2700 ppm of glycerin;
from 100 to 800 ppm of ethanol; and
from 50 to 600 ppm of γ-cyclodextrin.

### Examples

Hereinafter, the present invention will be specifically described by illustrating examples, but the present invention is not limited to the following examples.

### [Reference Example] RebD Solubility in Ethanol Water Solution

For reference, the extent to which RebD was dissolved in an ethanol water solution was evaluated. First, ethanol (purity: 99%) and water were mixed so that the ethanol content was 50%, 80%, and 90% in volume%, and ethanol water solutions were prepared. In addition, for control, water containing no ethanol (ethanol content: 0%) was prepared. RebD (purity 95%) was added to each of the solvents at 10°C, 20°C, 30°C, and 40°C with stirring until white turbidity occurred, and 24 hours after the start of dissolution, a permeate was obtained with a 0.45-µm membrane filter, and RebD contained in the permeate was quantified by LCMS. The results are presented in Table 1.

### [Examples A] Various Glycerin-Ethanol Ratios

Glycerin (purity 99%, Nacalai Tesque, Inc.) and ethanol (purity 99%, Nacalai Tesque, Inc.) were mixed at various volume ratios presented in Table 1, and mixed solvents were obtained. At the time, a magnetic stirrer (HSH-6D, available from AS ONE Corporation) was used to stir the mixtures at 450 rpm at atmospheric temperature without heating or cooling until the mixtures were uniform, and mixed solvent were obtained.

### [Table 1]

**Table 1**

| | Volume ratio | | Weight ratio | |
|---|---|---|---|---|
| | Glycerin | Ethanol | Glycerin | Ethanol |
| Solvent 1 | 100 | 0 | 100.00 | 0.00 |
| Solvent 2 | 90 | 10 | 93.49 | 6.51 |
| Solvent 3 | 80 | 20 | 86.45 | 13.55 |
| Solvent 4 | 70 | 30 | 78.82 | 21.18 |
| Solvent 5 | 60 | 40 | 70.52 | 29.48 |
| Solvent 6 | 50 | 50 | 61.46 | 38.54 |
| Solvent 7 | 40 | 60 | 51.53 | 48.47 |
| Solvent 8 | 30 | 70 | 40.60 | 59.40 |
| Solvent 9 | 20 | 80 | 28.51 | 71.49 |
| Solvent 10 | 10 | 90 | 15.05 | 84.95 |

| | | | | |
|---|---|---|---|---|
| *The weight ratio was calculated, assuming that the specific gravity of glycerin was 1.26 and the specific gravity of ethanol was 0.79. | | | | |

In addition, separately, ethanol (purity 99%, Nacalai Tesque, Inc.) and glycerin (purity 99%, Nacalai Tesque, Inc.) were weighed at a predetermined ratio presented in Table 2 and added to a glass beaker. A magnetic stirrer (HSH-6D, available from AS ONE Corporation) was used to stir the mixture at 450 rpm at atmospheric temperature without heating or cooling until the mixture was uniform, and a mixed solvent was obtained. Specific gravity was calculated by mixing each solvent, then placing the mixed solution in a 100-mL measuring cylinder, and measuring the weight at the time. The specific gravity was measured at room temperature (24°C). A to F in the following table correspond to Solvents 2 to 7 in the table shown above.

### [Table 2]

**Table 2**

| | A | B | C | D | E | F |
|---|---|---|---|---|---|---|
| Glycerin (mL) | 180 | 160 | 140 | 120 | 100 | 80 |
| Ethanol (mL) | 20 | 40 | 60 | 80 | 100 | 120 |
| Specific gravity | 1.215 | 1.17 | 1.128 | 1.083 | 1.034 | 0.991 |

Subsequently, as presented in Table 3, 1 g of RebD (purity 95%) was weighed and added to a glass beaker containing 9 mL of each mixed solvent. The mixture was stirred at atmospheric temperature without heating or cooling. A magnetic stirrer (HSH-6D, available from AS ONE Corporation) was used to stir the mixture at 450 rpm. The RebD concentration on a weight basis was determined using the specific gravity described in Table 2.

### [Table 3]

**Table 3**

| | Type of solvent | Solvent amount (mL) | RebD amount (g) | RebD concentration (wt.%) |
|---|---|---|---|---|
| Example A1 | 1 | 9 | 1 | 8.10 |
| Example A2 | 2 | 9 | 1 | 8.38 |
| Example A3 | 3 | 9 | 1 | 8.67 |
| Example A4 | 4 | 9 | 1 | 8.97 |
| Example A5 | 5 | 9 | 1 | 9.30 |
| Example A6 | 6 | 9 | 1 | 9.70 |
| Example A7 | 7 | 9 | 1 | 10.08 |
| Example A8 | 8 | 9 | 1 | - |
| Example A9 | 9 | 9 | 1 | - |
| Example A10 | 10 | 9 | 1 | - |

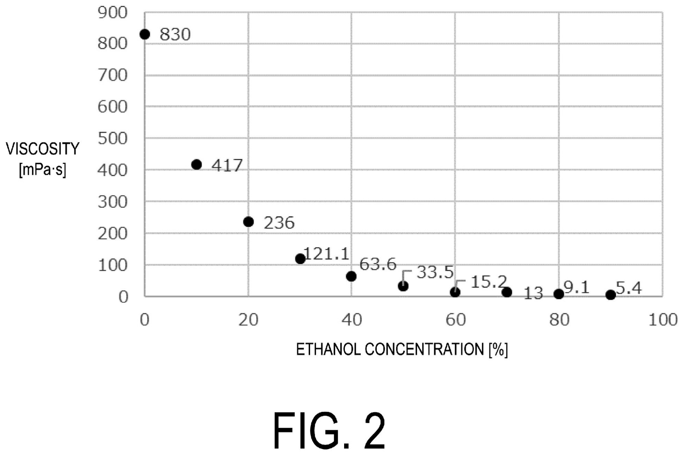

When the appearance was evaluated 4 hours after the addition of RebD to each solvent, RebD was all dissolved in the samples of Examples A3 to A6 to give transparent solutions. The samples of Examples A1, A2, and A7 indicated a slight amount of RebD remaining undissolved and a thin white turbid color. The samples of Examples A8 to A10 indicated a large amount of RebD remaining undissolved and a thick white turbid color. The viscosity of each resulting sample was measured using a viscometer (TVB-10, available from Toki Sangyo Co., Ltd.) in the range of 20 to 25°C. The results are presented in FIG. 2. In the sample using Solvent 1 (glycerin only), the viscosity reached as high as 830 mPa·s, and it can be understood that the handling is not easy. On the other hand, it can be seen that mixing with ethanol greatly reduces the viscosity and greatly improves the handleability.

### [Examples B] Dissolution Times in Glycerin/Ethanol Mixed Solvents

Mixed solvents were obtained by mixing glycerin and ethanol at various volume ratios as presented in Table 4 in the same manner as in Examples A.

### [Table 4]

**Table 4**

| | Glycerin | Ethanol |
|---|---|---|
| Solvent 1 | 100 | 0 |
| Solvent 2 | 90 | 10 |
| Solvent 3 | 80 | 20 |
| Solvent 4 | 70 | 30 |
| Solvent 5 | 60 | 40 |
| Solvent 6 | 50 | 50 |

Next, as presented in Table 5, 9 mL of each solvent was weighed and placed in a flask together with 1 g of RebD. The RebD concentration on a weight basis was determined using the specific gravity described in Table 2. A stirring bar was placed in the flask, and RebD was dissolved with stirring. A magnetic stirrer (HSH-6D, available from AS ONE Corporation) was used to stir the mixture at 450 rpm.

### [Table 5]

**Table 5**

| | Type of solvent | Solvent amount (mL) | RebD amount (g) | RebD concentration (wt.%) | Temperature (°C) |
|---|---|---|---|---|---|
| Example B1 | 1 | 9 | 1 | 8.10 | 40 |
| Example B2 | 2 | 9 | 1 | 8.38 | 40 |
| Example B3 | 3 | 9 | 1 | 8.67 | 40 |
| Example B4 | 4 | 9 | 1 | 8.97 | 40 |
| Example B5 | 5 | 9 | 1 | 9.30 | 40 |
| Example B6 | 6 | 9 | 1 | 9.70 | 40 |

The time from the start of stirring until complete dissolution was measured and summarized in Table 6.

### [Table 6]

**Table 6**

| | Time until dissolution |
|---|---|
| Example B1 | > 24 hr |
| Example B2 | 97 min |
| Example B3 | 23 min |
| Example B4 | 15 min |
| Example B5 | 15 min |
| Example B6 | 10 min |

### [Examples C] Dissolution Times at Different RebD Contents

Glycerin and ethanol were mixed at a volume ratio of 70:30 in the same manner as in Solvent 4 of Examples A, and a mixed solvent was obtained. This mixed solvent was used in the present examples. The content of RebD on a weight basis was calculated using the specific gravity of the solvent (mixed solvent 1.128, glycerin 1.26).

### [Table 7]

**Table 7**

| | | Blending amount | | Content | |
|---|---|---|---|---|---|
| | Solvent | Solvent (mL) | RebD (g) | RebD (w/v%) | RebD (wt.%) |
| Example C1 | Solvent 4 | 28.5 | 1.5 | 5 | 4.46 |
| Example C2 | Solvent 4 | 27 | 3 | 10 | 8.97 |
| Example C3 | Solvent 4 | 25.5 | 4.5 | 15 | 13.53 |
| Example C4 | Solvent 4 | 24 | 6 | 20 | 18.14 |
| Control | Glycerin | 27 | 3 | 10 | 8.10 |

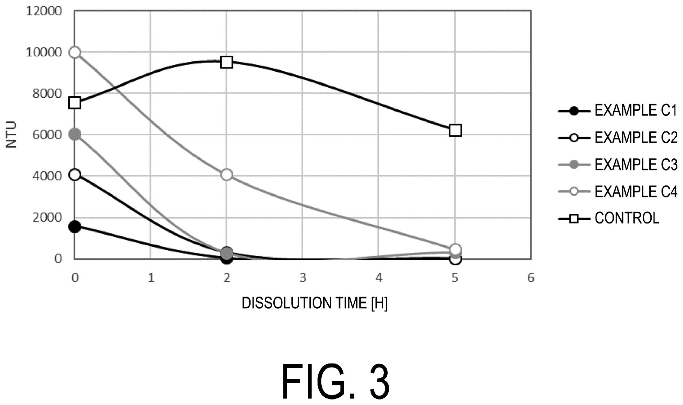

Changes in turbidity (NTU) from the time of sample preparation until 5 hours were measured using a benchtop turbidimeter 2100AN available from HACH Company. RebD was dissolved in a glass vial while each solvent was kept warm in a water bath at 40°C without stirring. The results are presented in FIG. 3.

### [Examples D] Dissolution Times at Different RebD Contents and Temperatures

Dissolution times at different RebD contents and temperatures were evaluated using Solvent 4 in the same manner as in Examples C. The samples used are as in Table 8 below. The content of RebD on a weight basis was calculated using the specific gravity of the solvent (mixed solvent: 1.128).

### [Table 8]

**Table 8**

| | | Blending amount | | Content | |
|---|---|---|---|---|---|
| | Solvent | Solvent (mL) | RebD (g) | RebD (w/v%) | RebD (wt.%) |
| Example D 1 | Solvent 4 | 48.5 | 1.5 | 3 | 2.67 |
| Example D2 | Solvent 4 | 47 | 3 | 6 | 5.36 |
| Example D3 | Solvent 4 | 45.5 | 4.5 | 9 | 8.06 |
| Example D4 | Solvent 4 | 44 | 6 | 12 | 10.79 |
| Example D5 | Solvent 4 | 42.5 | 7.5 | 15 | 12.29 |
| Example D6 | Solvent 4 | 28.5 | 1.5 | 5 | 4.46 |
| Example D7 | Solvent 4 | 27 | 3 | 10 | 8.97 |
| Example D8 | Solvent 4 | 25.5 | 4.5 | 15 | 13.53 |
| Example D9 | Solvent 4 | 24 | 6 | 20 | 18.14 |

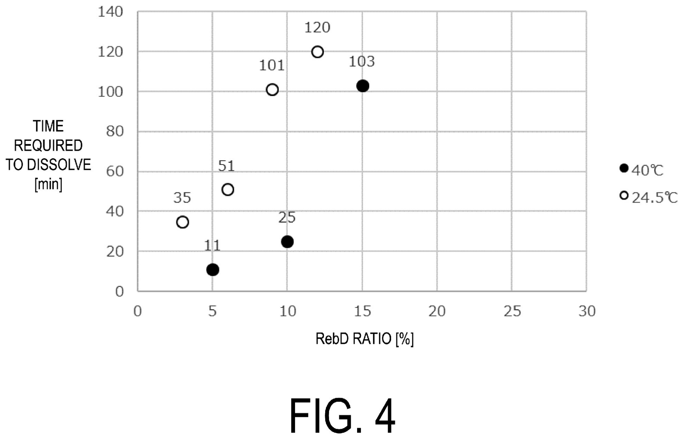

In the same manner as in Solvent 4 of Examples A, glycerin and ethanol were mixed at a volume ratio of 70:30 to obtain a mixed solvent, and the mixed solvent was added to a glass beaker to have RebD (purity 95%) at a predetermined ratio. The mixture was stirred under a condition of 24.5°C or 40°C until uniform dispersion was achieved. A magnetic stirrer (HSH-6D, available from AS ONE Corporation) was used to stir the mixture at 450 rpm. The dispersion of RebD was visually confirmed, and this was taken as the dissolution completion time. The samples of Examples D1 to D5 were stirred at 24.5°C, and the samples of Examples D6 to 9 were stirred at 40°C. Differently from Examples C, the time required to dissolve with stirring was evaluated in the present examples. The results are presented in FIG. 4. At 24.5°C, it took 180 minutes or more to dissolve RebD at a content of 15 w/v% or more, and at 40°C, it took 150 minutes or more to dissolve RebD at a content of 20 w/v% or more.

### [Examples E] Study of Prevention of Redeposition

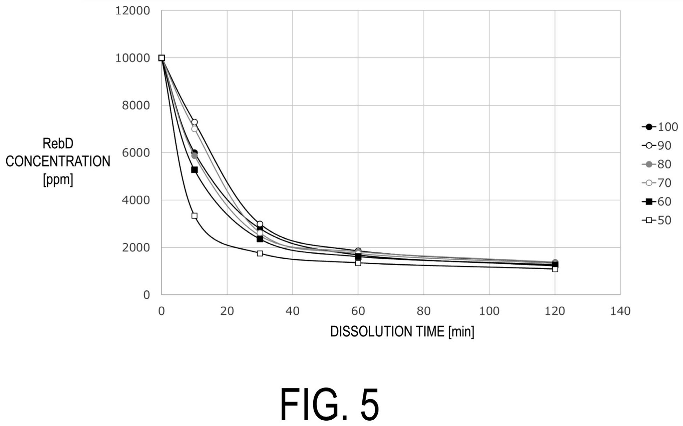

To the liquid compositions of Examples B1 to B6 obtained in Examples B, water was added to have the initial concentration of RebD to 10000 ppm. Immediately after the addition, the amount of RebD dissolved in water was monitored and observed until 120 minutes later. The results are presented in FIG. 5. The numerical values of the samples in the figure means the volume ratios of glycerin used in the sample, and the sample of "100" is the sample of Example B1. From the results, the RebD concentration decreased to about 1500 ppm after 120 minutes. In addition, redeposition of RebD was able to be visually observed about 5 to 10 minutes after the start of the test.

### [Examples F] Study of Effect of Cyclodextrin

A liquid composition was prepared in the same manner as in Example C2 of Examples C, and 7 mL of the liquid composition was weighed. γCyclodextrin was added as in Table 9 and dissolved by stirring at 50°C. From the solution, 5 mL was collected and added to pure water weighed so that the final RebD concentration was about 10000 ppm. The mixture was sampled over time, a permeate was obtained with a 0.45-µm membrane filter, and RebD dissolved in the permeate was quantified by LCMS.

### [Table 9]

**Table 9**

| | Oral liquid composition (mL) | RebD content (g) | γCyclodextrin (g) | Cyclodextrin amount (g) per g of RebD | Temperature (°C) |
|---|---|---|---|---|---|
| Example F1 | 7 | 0.7 | 0.7 | 1.0 | 50 |
| Example F2 | 7 | 0.7 | 0.5 | 0.7 | 50 |
| Example F3 | 7 | 0.7 | 0.3 | 0.4 | 50 |
| Example F4 | 7 | 0.7 | 0.1 | 0.1 | 50 |

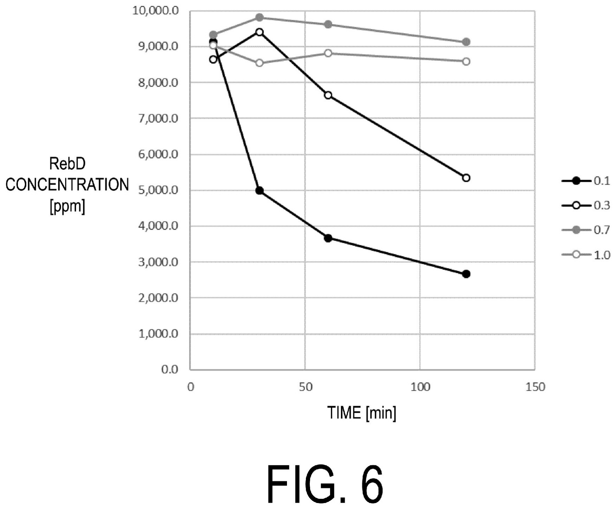

The presence or absence of redeposition after the addition was evaluated. The results are presented in FIG. 6. It was observed that the addition of the cyclodextrin prevented the redeposition of RebD. Among Examples F1 to F4, the sample of Example F2, in which the amount of the cyclodextrin per g of RebD was 0.7 g, most effectively prevented the redeposition of RebD.

### [Example G] Sensory Evaluation

### Preparation of Sample

A liquid composition (glycerin and ethanol mixed at a volume ratio of 70:30 (specific weight: 1.128)) of Example C3 of Examples C was prepared, 10 g of the liquid composition was weighed, and 1.5 g of γcyclodextrin (Nacalai Tesque, Inc.) was added. To adjust the sweetness of the sample to 10 sucrose equivalent value (SEV), the sweetness of RebD relative to that of sucrose was taken as 200, 0.866 g of the aforementioned sample (containing 100 mg of RebD) was weighed, and pure water was added to adjust the solution volume to 200 mL. The composition of the resulting beverage sample is presented in Table 10. For comparison with the beverage sample, a solution containing only RebD was prepared by adding pure water to 100 mg of RebD and adjusting the solution volume to 200 mL, and a sugar solution was prepared by adding pure water to 20 g of sucrose (saccharose, available from Mitsubishi Chemical Foods Corporation) and adjusting the solution volume to 200 mL.

### [Table 10]

**Table 10**

| | Concentration (ppm) in liquid composition | | | Concentration (ppm) in beverage | | |
|---|---|---|---|---|---|---|
| | Glycerin | Ethanol | RebD | Glycerin | Ethanol | RebD |
| Example G1 | 676136 | 181683 | 135281 | 2499 | 671.5 | 500 |

### Sensory Evaluation

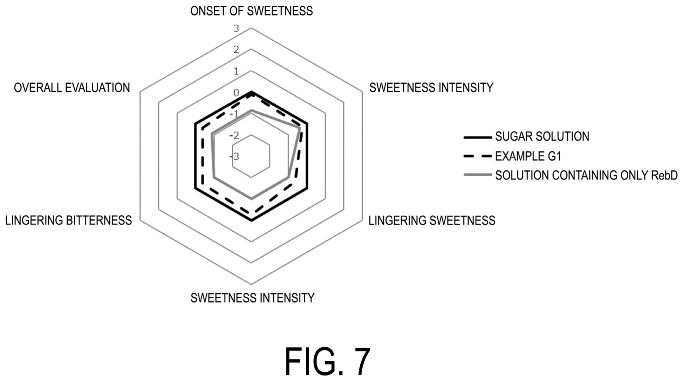

Taste qualities of the resulting beverage sample were comparatively evaluated by sensory. Taste qualities for sensory evaluation items were "onset of sweetness", "sweetness intensity", "lingering sweetness", "bitterness intensity", "lingering bitterness", and "overall evaluation". These were verified by those (four persons) well-trained for sensory serving as panelists. Specifically, the score of the sample containing only sugar (reference sample, sweetness intensity 10, sucrose content 10 g/100 mL) was set to 0 point, and the differences in taste qualities from those of this reference sample were quantified in increments of 0.5 points in the range of -3.0 to +3.0. Before conducting the test, sufficient adjustment was made for the purpose and scoring method between the panelists. The results are presented in Table 11 and FIG. 7. The results obtained are the average scores of ratings by four panelists.

### [Table 11]

**Table 11**

| Sample | Onset of sweetness | Sweetness intensity | Lingering sweetness | Bitterness intensity | Lingering bitterness |
|---|---|---|---|---|---|
| Sugar solution | 0 | 0 | 0 | 0 | 0 |
| Example G1 | -0.125 | -0.25 | -0.625 | -0.25 | -0.375 |
| Solution containing only RebD | -0.875 | -0.375 | -1 | -1 | -1 |

## Claims

1. A liquid composition, comprising a mixed solvent and RebD, the mixed solvent comprising, based on a total weight of the mixed solvent:
from 50 to 95 wt.% of one or more polyhydric alcohols selected from the group consisting of glycerin, ethylene glycol, and propylene glycol; and
from 5 to 50 wt.% of ethanol,
wherein a content of the RebD is from 1.5 to 30 wt.% based on a total weight of the liquid composition.

2. The liquid composition according to claim 1, wherein a ratio of the one or more polyhydric alcohols to the ethanol is from 15:1 to 1:1 by weight.

3. The liquid composition according to claim 1 or 2, wherein a total content of the one or more polyhydric alcohols and the ethanol is from 90 to 100 wt.% based on a total weight of the mixed solvent.

4. The liquid composition according to any one of claims 1 to 3, consisting essentially of the RebD, the one or more polyhydric alcohols, and the ethanol.

5. A beverage concentrate, comprising the liquid composition according to any one of claims 1 to 4 and from 50 to 99 wt.% of water based on a total weight of the beverage concentrate.

6. A beverage concentrate, comprising RebD; one or more polyhydric alcohols selected from the group consisting of glycerin, ethylene glycol, and propylene glycol; ethanol; and water,
wherein the beverage concentrate comprises, based on a total weight of the beverage concentrate:
from 0.01 to 10 wt.% of RebD;
from 0.4 to 50 wt.% of the one or more polyhydric alcohols; and
from 0.4 to 25 wt.% of ethanol.

7. The beverage concentrate according to claim 5 or 6, comprising one or more cyclodextrins selected from the group consisting of α-cyclodextrin, β-cyclodextrin, γ-cyclodextrin, and 2-hydroxy-ycyclodextrin.

8. The beverage concentrate according to any one of claims 5 to 7, comprising γ-cyclodextrin.

9. A beverage comprising the beverage concentrate according to any one of claims 5 to 8.

10. A method for producing a liquid composition comprising from 1.5 to 30 wt.% of RebD based on a total weight of the liquid composition, the method comprising:
preparing a mixed solvent comprising, based on a total weight of the mixed solvent:
from 50 to 95 wt.% of one or more polyhydric alcohols selected from the group consisting of glycerin, ethylene glycol, and propylene glycol; and
from 5 to 50 wt.% of ethanol; and
dissolving RebD in the mixed solvent to prepare a liquid composition comprising from 1.5 to 30 wt.% of RebD based on a total weight of the liquid composition.

11. The method according to claim 10, wherein a ratio of the one or more polyhydric alcohols to the ethanol in the mixed solvent is from 15:1 to 1:1 by weight.

12. A beverage, comprising:
from 1 ppm to 700 ppm of RebD;
from 5 ppm to 3000 ppm of one or more polyhydric alcohols selected from the group consisting of glycerin, ethylene glycol, and propylene glycol; and
from 2 ppm to 1000 ppm of ethanol.

13. The beverage according to claim 12, comprising from 1 ppm to 700 ppm of RebD, wherein a ratio of the one or more polyhydric alcohols to the ethanol is from 15:1 to 1:1 by weight.

14. The beverage according to claim 12 or 13, comprising one or more cyclodextrins selected from the group consisting of α-cyclodextrin, β-cyclodextrin, γ-cyclodextrin, and 2-hydroxy-γcyclodextrin.

15. A 2- to 10-fold concentrate of the beverage according to any one of claims 12 to 14.
